# EUROPEAN PATENT APPLICATION

(11) **EP 4 609 717 A1**
(43) Date of publication of application: **03.09.2025**
(21) Application number: 24160588.0
(22) Date of filing: 29.02.2024
(51) Int. Cl.: A22C 11/12

(54) **CLIP FEEDING SYSTEM**

(71) Applicant: Poly-clip System GmbH & Co. KG, 65795 Hattersheim (DE)
(72) Inventor: Wally, Jürgen, 60433 Frankfurt am Main (DE); Würth, Thorsten, 65779 Kelkheim (DE)
(74) Representative: Eisenführ Speiser

(57) **Abstract**

The present invention relates to a system (1) for feeding closure clips (C) to a clip-ping device (20) of a clip-ping machine (CM) for producing sausage-shaped products (S), like sausages. The system (1) comprises a feeding device (300 for feeding at least a first and a second strand of closure clips (C) towards said clipping device (20), and a guide device (200) including at least a first and a second guide channel (216; 218) for guiding the at least first and second strand of closure clips (C) towards a closing position of the clipping device (20) of said clipping ma-chine (CM). The guide device (200) includes a holding unit (220) for holding at least one of the first and second strands of closure clips (C) in its position while not being fed by the feeding device (300). The present invention further relates to a clipping ma-chine (CM) for producing sausage-shaped products (S) which includes a system (1) for feeding closure clips (C) to the clipping device (20) of the clipping machine (CM), a guide device (200) for use in a clipping machine (CM), and a method for producing sausage-shaped products (S).

## Description

The present invention relates to a system for feeding closure clips to a clipping device of a clipping machine for producing sausage-shaped products, like sausages, a clipping machine for producing sausage-shaped products, which includes a system for feeding closure clips, a guide device for use in a clipping machine, and a method for producing sausage-shaped products.

In practice, packaging machines, such as clipping machines, are known for producing sausage-shaped products, such as sausages, in which filling material, such as a flowable or granular filling material, is fed into a tubular or bag-shaped packaging casing which is stored or supported on a filling tube and which is closed at its front end by closure means, such as at least one closure clip, i.e. the end of the packaging casing facing in the filling direction of the filling material. After a predetermined portion or amount of filling material has been filled into the tubular or bag-shaped packaging casing, the filled tubular or bag-shaped packaging casing is gathered by gathering means, a plait-like portion or section which is at least substantially free from filling material is formed thereto, and at least a first closure clip is placed and closed on said plait-like portion by a clipping device for closing the portion of the tubular or bag-shaped packaging casing just filled. Additionally, at least one second closure clip can be placed for closing the front end of the sausage-shaped product to be produced next. For separating the sausage-shaped product just produced from the remaining supply of a tubular or bag-shaped packaging casing, a cutting device may be provided for cutting off the plait-like portion between the first and second closure clip. If it is intended to store or deposit said sausage-shaped products on a rod-like or rod-shaped element, such as a smoking rod, e.g. for further treatment such as cooking or smoking, a suspension element, such as a suspension loop, can be provided by a feeding device to the clipping machine to be attached to one end of each of the sausage-shaped products or to one end of a chain of sausage-shaped proPM 7ducts by the closure clip that closes the respective end of the sausage-shaped product.

From EP 2 457 445 A2, a clipping machine is known, in which a tubular packaging casing is filled with filling material, and the filled tubular casing is than gathered and closed by applying at least one closure clip onto the gathered portion. The closure clips in the form of a strand or chain of closure clips joined with each other as a row of closure clips, also designated as R-clips, are guided along a tool arm at the front of which one of the closing tool, namely the die, is arranged. The closure clips are fed towards the die by a feed lever that engages a gap between two subsequent closure clips in the strand of closure clips, such that the foremost closure clip engages said closing tool or die.

The strand of closure clips, which is usually made of a metal such as aluminium or an alloy comprising aluminium, is wound on a reel, and thus, it is under tension. As a result, there is a risk that the clip strand will change position without an active drive. The same can also be the result of the vibrations that occur due to the closing process, so that when operation continues, the foremost clip is not placed exactly in the die or, in the case of a clipping machine in which two strands are fed in parallel to a correspondingly shaped die, but only one is to be processed, the foremost clip of the second clip strand also comes to rest in the die and is then closed around the plait-portion of the product to be produced, which is not actually intended.

Thus, it is an object of the present invention to provide a system for feeding closure clips to a clipping device of a clipping machine, a clipping machine, a guide device and a method for producing sausage-shaped products, to overcome the above drawbacks and to enable a safe and reliable production process.

According to the present invention, a system for feeding closure clips to a clipping device of a clipping machine for producing sausage-shaped products, like sausages, is provided. The system comprises a feeding device for at least selectively feeding at least a first and a second strand of closure clips towards a closing position of the clipping device, in which the foremost clip of one or both strands of closure clips can be attached to the sausage-shaped product, and a guide device having at least a first and a second guide track for guiding the at least first and second strands of closure clips towards the closing position of the clipping device of the clipping machine. In addition, the guide device comprises at least one holding unit for holding one of the strands of closure clip, the first or the second strand of closure clips, in a position outside the closing position of the clipping device when the feeding device feeds the other strand of closure clips into the closing position.

During two subsequent feeding steps, the at least first and/or the second strand of closure clips may come out of engagement with the feeding device and the closing tools. In this situation, the guide device, in particular, one or two holding units provided with the guide device, prevents one or both strands of closure clips from moving unintentionally, in particular from being pushed forwards by machine vibrations or from being pulled backward by tension. Accordingly, the strands of closure clips are in the correct position for being fed precisely to the closing tools of the clipping device.

Usually, a clipping machine is equipped with one or two strands of closure clips, for applying one or two closure clips onto a plait-like portion. In case of two strands of closure clips, a first closure clip for closing the end of the just filled portion of the tubular packaging material, and a second closure clip for closing the front end of the tubular packaging casing to be filled next, are applied to the plait-like portion. However, it is also possible that the feeding device is adapted to feed further strands of closure clips, like a third and a fourth strand of closure clips, towards the closing position of the clipping device that is adapted to apply and close three or four closure clips on the plait-like portion at the same time. In this configuration, the guide device includes further guide channels or guide tracks, like a third and a fourth guide channel, for guiding said further strands of closure clips towards the closing position of the clipping device of said clipping machine, and the holding unit is adapted to hold at least one of the first or second strands of closure clip or at least one of the further strands of closure clips in its position while the feeding device feeds the other strand of closure clips to the closing position. Of course, one, two, three or all four strands of closure clips can be held in position. This can be achieved by a single holding unit or by several holding units, one of which is provided for each strand of closure clips.

It has also to be understood that the holding unit may be adapted to hold only one of the strand of closure clips while not being fed by the feeding device, or to hold more than one strand of closure clips, like a second, a third or a fourth strand of closure clips.

Moreover, the holding unit, when adapted to hold more than one ore a plurality of strands of closure clips, may further be adapted to hold selected strands of closure clips out of the plurality of strands of closure clips. The strands of closure clips are usually aligned side by side or parallel to each other, at least in the area of the guide device. Accordingly, the holding unit may be adapted to hold the outer most strands of closure clips, the inner most strand of closure clips or selected strands of closure clips, like the first and the third strand of closure clips, in their position, while not being fed by the feeding device.

In a preferred embodiment of the inventive system, the at least first and second strands of closure clips are stepwise fed towards the closing position of the clipping device by the feeding device, and the holding unit is configured to hold at least one of the strands of closure clips, the first or the second strand of clips, in a position outside of the closing position of the clipping device, at least between two subsequent or successive feeding steps.

A holding unit for holding for holding a strand of closure clips may be realized in various ways. For example, a holding unit may include one or more elements, like pneumatically driven pins or the like, that engage a gap or recess between two subsequent clips in the strand of clips. In a further preferred embodiment, the holding unit comprises at least one retaining element which is reversibly movable between a holding position for holding at least one of the strands of closure clips, the first or the second strand of clips, in a position outside of the closing position of the clipping device by reversibly engaging or a registerable engagement with the strand of closure clips to be held, and a release position in which the retaining element is out of engagement with the strand of closure clips.

In this embodiment, the at least one retaining element may include at least one engagement or engaging portion for engaging with one or several recesses or gaps formed in the strand of closure clips of said at least one of the first and second strand of closure clips, when said retaining element is in the holding position.

In a simple design, the holding unit, and in particular the retaining element, may be manufactured from a biasing material, such that said retaining element automatically springs back and forth when the strand of closure clips is pushed forwards by the feeding device. In an advantage design, the holding unit includes at least one actuation element for reversibly keeping or holding the at least one retaining element in the holding position.

In a further advantage design, the actuation element is moved passively or actively into the holding position. The actuation element may be a compression spring which pushes the retaining element into the holding position. By selecting a specific spring having a selected force, the clamping pressure for holding the strand of closure clips in the holding position may be adjusted. The actuation element can also be formed by a magnetic switch or the like.

In the inventive system, the guide device may include a coverage, preferably forming a portion of the first and second guide tracks, and the at least one retaining element is provided in a recess arranged in said coverage. Thereby, said retaining element does not exceed the outer surface of said coverage, whereby it does not touch or collide with other elements or assemblies of the clipping machine.

In the inventive system, the feeding device includes a feeding unit for feeding the first and second strand of closure clips towards the closing position of the clipping device, having a feeding lever with a first and a second feeding element, with the first feeding element engaging the first strand of closure clips during feeding of the first strand of closure clips, and the second feeding element engaging the second strand of closure clips during feeding of the second strand of closure clips. In this system, at least one of the feeding elements, the first or the second feeding element, is reversibly movable between a feeding position in which said at least one feeding element is in engagement with one of the strands of closure clips, the first or the second strand of closure clips, during feeding of the strands of closure clips, and a retracted position in which said at least one feeding element is out of engagement with one of the strands of closure clips, the first or the second strand of closure clips, during feeding of the other strand of closure clips for interrupting the feeding of said strand of closure clips.

This design enables both, the application of two closure clips to the closing position of the clipping device and then to a plait-like portion of a tubular packaging casing, e.g. for producing separate sausage-shaped products, and the application of only one closure clip to said plait-like portion, e.g. for producing chains of sausage-shaped products with only one closure clip arranged between two subsequent sausage-shaped products, and/or at the start or the end of the supply of tubular packaging casing and/or the start or the end of the production process.

For reversibly moving one of the first and second feeding elements between the feeding position and a retracted position, the at least one of the first and second feeding elements may pivotally be coupled to said feeding lever, such that the feeding element may be pivoted out of the feeding position into the retracted position. However, it is also possible that the at least one of the first and second feeding elements is linearly movable along said feeding lever. In this case, a linear drive, like a pneumatic piston/cylinder drive may be provided, with the respective feeding element being coupled to the piston of said piston/cylinder drive.

According to the present invention, there is provided a clipping machine for producing sausage-shaped products, by filling a filling material into a tubular packaging casing. The clipping machine comprises a clipping device having first and second closing tools that are reversibly movable between an opened position and a closed position for applying at least one, preferably two closure clips to a plait-like portion formed to a filled and gathered tubular packaging casing, and closing said one or both closure clips by moving the closing tools into their closed position, in case of two closure clips a first closure clip for closing the just filled portion of the tubular packaging casing and a second closure clip for closing the portion of the tubular packaging casing to be filled next. In addition, the clipping machine comprises a control unit for controlling the clipping machine, and a system for feeding closure clips to the clipping device of said clipping machine as explained above.

In the inventive clipping machine, the control unit may further control the feeding device for selectively feeding a first and a second strand of closure clips towards the closing position of the clipping device.

The control unit may be provided with programs for producing specific products, which include control commands for controlling the feeding device. However, it is also possible the an operator may manually enter control commands for controlling the feeding device, e.g. for adapting an existing program or for creating new programs.

Further according to the present invention, there is provided a guide device for use in a clipping machine for producing sausage-shaped products, like sausages. Said guide device includes at least a first and a second guide track for guiding the at least first and second strand of closure clips towards a closing position of the clipping device of said clipping machine, in which the front most clip of one or both the strands of closure clips can be attached to the sausage-shaped product. Said guide device further includes a holding unit for holding at least one of the strands of closure clip, the first or the second strand of closure clips, in a position outside the closing position of the clipping device when the feeding device feeds the other strand of closure clips to the closing position. The inventive guide device may be provided as a spare part or as a replacement part for replacing existing guide devices that does not include a holding unit according to the present invention.

Moreover, a method for producing sausage-shaped products, like sausages, is provided. The inventive method comprises the steps of filling a filling material into a tubular packaging casing and forming a plait-like portion to said filled tubular packaging casing, applying two closure clip to said plait-like portion, and closing said closure clips by a clipping device having first and a second closing tools which are reversibly movable between an opened position and a closed position, a first closure clip for closing the just filled portion of the tubular packaging casing and a second closure clip for closing the portion of the tubular packaging casing to be filled next. The method further comprises the steps of at least selectively feeding by a feeding device a first or a second strand of closure clips towards a closing position of a clipping device), in which the front most clip of one or both the strands of closure clips can be attached to the sausage-shaped product, guiding by a guide device a first and a second strand of closure clips towards the clipping device, such that the front most closure clip of the first and second strand of closure clips is arranged in the closing position, and holding at least one of the strands of closure clips in a position outside the closing position of the clipping device, when the feeding device feeds the other strand of closure clips to the closing position.

The method further comprising the step of interrupting the feeding of one of the strands of closure clips towards closing position of the clipping device, at least for one feed step.

The method according to the present invention thereby provides all advantages explained in conjunction with the inventive system, the inventive clipping machine and the inventive guide device.

Further advantages and preferred embodiments of the present invention will be described in the following together with the drawings listed below. The expressions "*left*", "*right*", "*below*" and "*above*" used in the following description, are referred to the drawings in an alignment such that the reference numbers and the notation of the figures used can be read in normal orientation.
- Fig. 1:: is a schematic view showing the principal design of a system for producing sausage-shaped products;
- Fig. 2:: is a perspective view to a lower clipping lever of a clipping machine ac-cording to the present invention, with feeding elements of a feeding unit in a transport position;
- Fig. 3:: is a perspective view to the lower clipping lever of Fig. 2, with one of the feeding elements of the feeding unit in a retracted position;
- Fig. 4:: is another perspective view to the lower clipping lever of Fig. 2;
- Fig. 5:: is a perspective view to a guide device according to the present invention, seen from below;
- Fig. 6:: is a further perspective view to the guide device of Fig. 5, with two strands of closure clips;
- Fig. 7:: is a perspective view to the guide device of Fig. 6, seen from below; and
- Fig. 8:: is a perspective view to the retaining element of the holding unit according to the present invention.

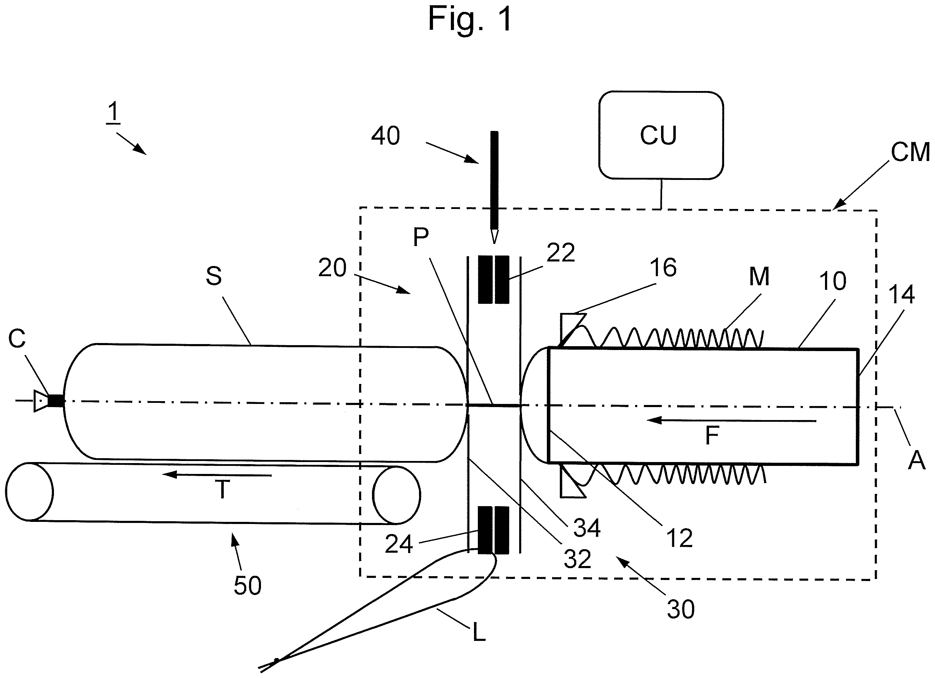

The general structure of a system 1 for producing sausage-shaped products S, such as sausages, containing a flowable or granular filling material in a tubular packaging casing M, is shown schematically in Fig. 1.

System 1 comprises as main components a closing or clipping machine CM with a filling tube 10, the central axis A of which extends in the longitudinal direction and, in the embodiment shown, horizontally. The longitudinal direction coincides with a filling direction F of a filling material.

Filling tube 10 has a discharge opening at its first end 12 for discharging a filling material fed or guided through filling tube 10 and a feeding opening at its second end 14 for feeding or introducing the filling material into filling tube 10 along filling direction F. The filling material is conveyed or fed from the feeding opening in filling direction F to the discharge opening of filling tube 10, for example by a feed pump of a filler being located right from system 1 shown in Fig. 1.

Moreover, a casing brake assembly 16 is arranged on and coaxially to filling tube 10 in the region of first end 12 of filling tube 10. Filling tube 10 is made of a suitable material, such as stainless steel. In addition to the horizontal orientation shown, filling tube 10 can also extend at an angle to the horizontal.

Tubular packaging casing M made of a thin sheet or film material is mounted or stored on filling tube 10 folded in an accordion like manner. Tubular packaging casing M is pulled-off during the manufacturing process of producing sausage-shaped products S, in particular by the feeding pressure, when the filling material is filled into tubular packaging casing M. Casing brake assembly 16 provides an preferably adjustable braking force which enables a controlled pulling-off of tubular packaging casing M from filling tube 10 during the filling process.

Clipping machine CM further comprises gathering means 30 for gathering or shirring a section of the filled tubular packaging casing M and forming a plait-like portion or section P thereto. In addition, a clipping device 20 is provided for closing a portion of tubular packaging casing M just filled by applying or attaching closure means, such as at least a first closure clip C, to plait-like portion P and preferably closing the front end of the next section of tubular packaging casing M to be filled subsequently by further closure means, such as a at least one further or second closure clip C. These components are all arranged downstream filling tube 10.

As can be inferred from Fig. 1, clipping device 20 is positioned immediately downstream first end 12 of filling tube 10, and is aligned coaxially with filling tube 10, i.e. when closing tools of clipping device 20 are reversibly moved together to close one or more closure means C, the axis of the plait-like portion P extends at least approximately coaxially to central axis A of filling tube 10.

Clipping device 20 comprises first and second clipping or closing tools 22, 24 formed by at least one punch 22 and at least one die 24. It should be noted that punch 22 and die 24 can apply and close a single closure clip C for closing a just filled tubular packaging casing M, or can apply and close two or more closure clips C at the same time, at least a first closure clip C for closing the rear end of a just filled tubular packaging casing M for forming a complete sausage-shaped product S and at least a second closure clip C for closing the front end of a tubular packaging casing M to be subsequently filled.

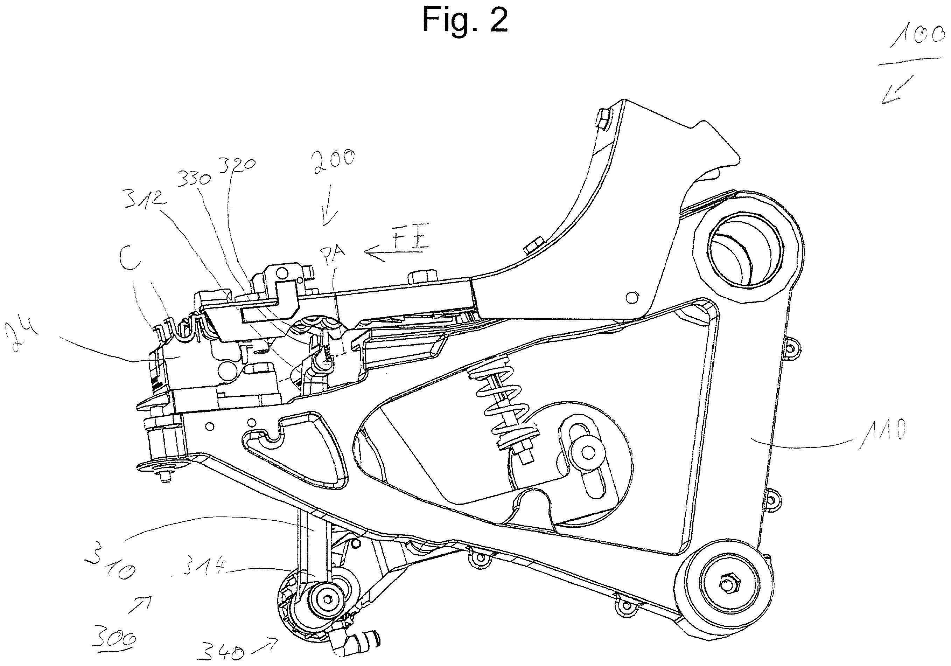

Dependent on the kind of clipping machine CM and/or the kind of closure clips C processed on clipping machine CM, clipping machine CM may include an upper and a lower clipping lever which carry closing tools 22, 24, and by which closing tools 22, 24 are moved for closing closure clips C. The location at which the closure clip C is closed by closing tools 22, 24 can also be referred to as the closing position of clipping device 20. An embodiment of a lower clipping lever 100 is shown in Figs. 2 to 4, which carries second closing tool or die 24.

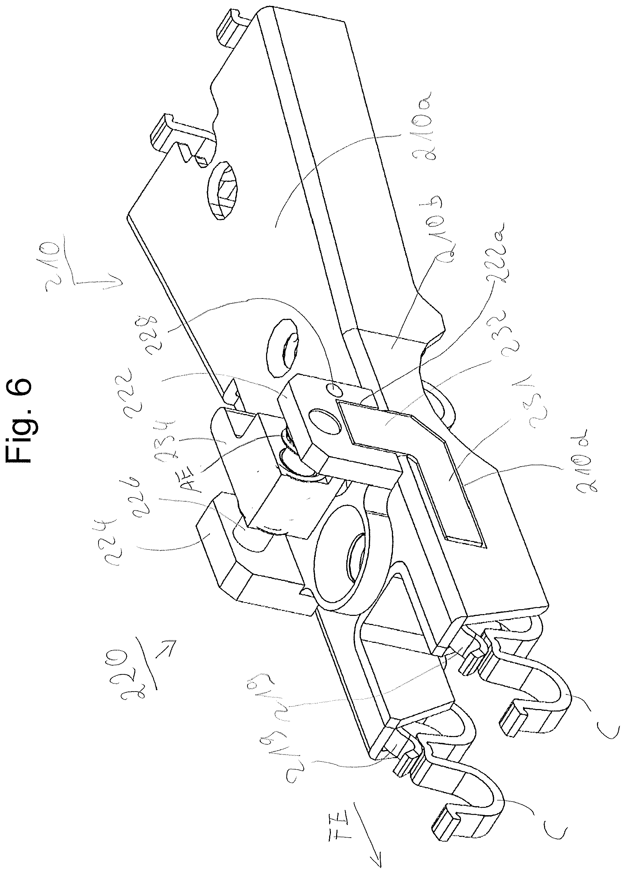

The one closure clip C or the two closure clips C are fed to closing tools 22, 24 as chains or strands of connected closure clips C. During the closing process, the foremost clip C of one or both strands of closure clips C is or are separated from the chain of closure clips C by punch 22. Viewed in a direction transverse to the central axis A, closure clips C can have an at least approximately U-shape and are connected to each other at the free ends of the respective U-shape. Closure clips C, which are fed as a chain, are also referred to as R-clips (cf. also Fig. 6).

Gathering means 30 include a first displacer unit 32 and a second displacer unit 34, wherein first displacer unit 32 is positioned downstream second displacer unit 34. First and second clipping tools 22, 24 of clipping device 20 may be positioned between first and second displacer units 32, 34 to apply and close one or more closure clips C to plait-like portion P. First and second displacer units 32, 34 can each have a first and second displacer element which can be reversibly moved towards each other in a scissor-like manner to form the plait-like portion P. First displacer unit 32 can reversibly be moved parallel to filling direction F of the filling material to form a plait-like portion P of a desired length.

If it is intended to store sausage-shaped products S on a rod-like element, such as a smoking rod, e.g. for further processing, such as cooking or smoking, a suspension element L, such as a suspension loop, may be provided and attached to one end of each sausage-shaped product S or to one end of a chain of sausage-shaped products S. A loop feeding device feeds suspension elements L to one of closing tools 22, 24 which attach suspension element L to a respective end of sausage-shaped product S by means of a closure clip C which closes said end of sausage-shaped product S.

For separating a sausage-shaped product S just produced from the remaining tubular packaging casing M stored or supported on filling tube 10, a cutting device 40 may be provided. Said cutting device 40 cuts the tubular packaging casing M, referred to filing direction F, upstream of closure clip C that closes the just filled portion of tubular packaging casing M. In case that two closure clips C have been applied to plait-like portion P by clipping device 20, cutting device 40 cuts plait-like portion P between said two closure clips C.

To remove a sausage-shaped product S just produced from clipping machine CM in a transportation direction T, which at least substantially coincides with filling direction F, a discharge device 50 is arranged downstream clipping device 20, which may be a belt conveyor comprising a conveyor belt and guide rollers.

For storing or depositing sausage-shaped products S on a rod-like element, suspension element L is captured or caught by a catching unit, which may include a catching element, such as a catching needle, and is provided for guiding suspension element L to the rod-like element.

Clipping machine CM further comprises a control unit CU for controlling at least clipping machine CM, particularly the components of clipping machine CM, such as at least first and second clipping tools 22, 24 of clipping device 20 and first and second displacer units 32, 34 of gathering means 30.

Clipping machine CM comprises, at least when processing closure clips C that are provided in the form of strands of closure clips C, a lower clipping lever 100 (shown in Figs. 2-4) that carries the lower clipping tool or die 24 of clipping tools 22, 24.

Figs. 2 to 4 show lower clipping lever 100 of clipping machine CM according to the present invention. As can be seen in Fig. 2, lower clipping lever 100 has a base body 110, which has a substantially triangular shape, with die 24 arranged in the region of its left corner in such a way that die 24 can accommodate one or two foremost closure clips C of one or both closure clip strands. Along the upper side of body 110 of closing lever 100, two strands of closure clips C can be guided by a guided device 200 in a feeding direction FE.

Clipping lever 100 further comprises a feeding device 300 for feeding strands of closure clips C towards clipping device 20 such that the front most or foremost closure clips C of the strands of closure clips C are positioned in die 24, as can be seen in Fig. 2. Feeding device 300 includes a feeding lever 310. At the upper end 312 of feeding lever 310, a first feeding element 320 and a second feeding element 330 are arranged as can particularly be seen in Figs. 2 to 4. First and second feeding elements 320, 330 have the form of prongs extending upwards from first end 312 of feeding lever 310.

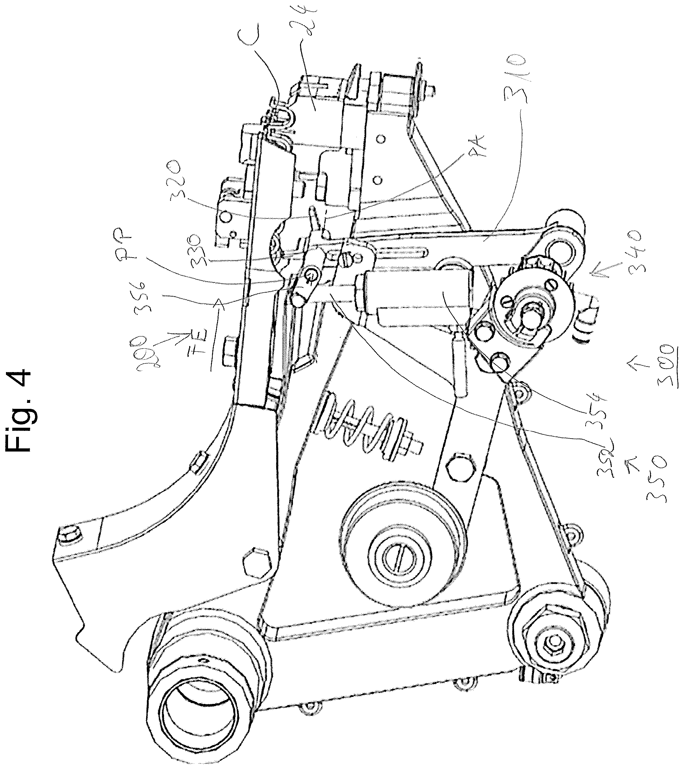

Lower end 314 of feeding lever 310 is coupled with to a feed drive in the form of a crank drive 340. Feeding lever 310 and crank drive 340 forms a feeding unit 310, 340. As it particularly can be seen in Fig. 4, in the central region of feeding lever 310, a pivot point is realized by a slot arranged in feeding lever 310, through which a pivot pin extends. When driven by crank drive 340, feeding lever 310 pivots about said pivot point, whereby first and second feeding elements 220, 230 reversibly engage a gap between two subsequent closure clips C, and push the strands of closure clips C in feeding direction FE about a length corresponding to the length of a closure clip C. The gap can be formed by the connecting web between two interconnected U-shaped clips C.

In the configuration of Fig. 2, first and second feeding elements 320, 330 are in a transport or feeding position, in which feeding elements 320, 330 come into engagement with the strands of closure clips C, for feeding the strands of closure clips C towards the closing position of clipping device 20.

Second feeding element 330 is integrally formed to first end 312 of feeding lever 310 and extends upwardly from feeding lever 310 and at least approximately parallel to its longitudinal direction.

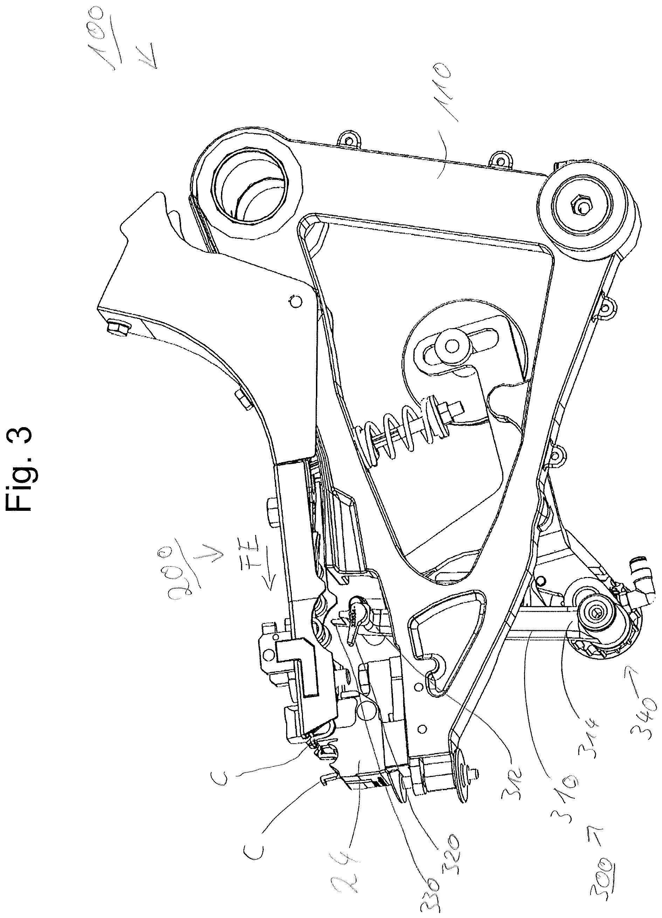

First feeding element 320 is pivotally coupled to first end 312 of feeding lever 310. A pivot pin PP extends through first end 312 of feeding lever 310, in an at least approximately horizontal plan and a direction vertically to feeding direction FE, and forms a pivot axis PA. First feeding element 320 is coupled with its lower end to the front end of pivot axis PA according to Figs. 2 and 3. To the rear end of pivot pin PP, a pivot lever 356 of a pivot drive 350 is coupled with one end to pivot pin PP. Pivot drive 350, in the embodiment shown in Figs. 2 to 4, is a pneumatic piston/cylinder drive, including a cylinder 354 that is mounted to body 110 of clipping lever 100, and a piston 352 the free end of which is coupled to the other end of pivot lever 356. Pivot drive 350 can also be formed by other drive means.

Upon actuation of pivot drive 350, first feeding element 320 is reversibly moved from the transport position as shown in Fig. 2, into the retracted position as shown in Figs. 3 and 4. Due to the fact that second feeding element 230 is integrally formed with feeding lever 310, it remains in the transport position. When first feeding element 320 is in the retracted position, the strand of closure clips C fed by first feeding element 320 is not fed any further.

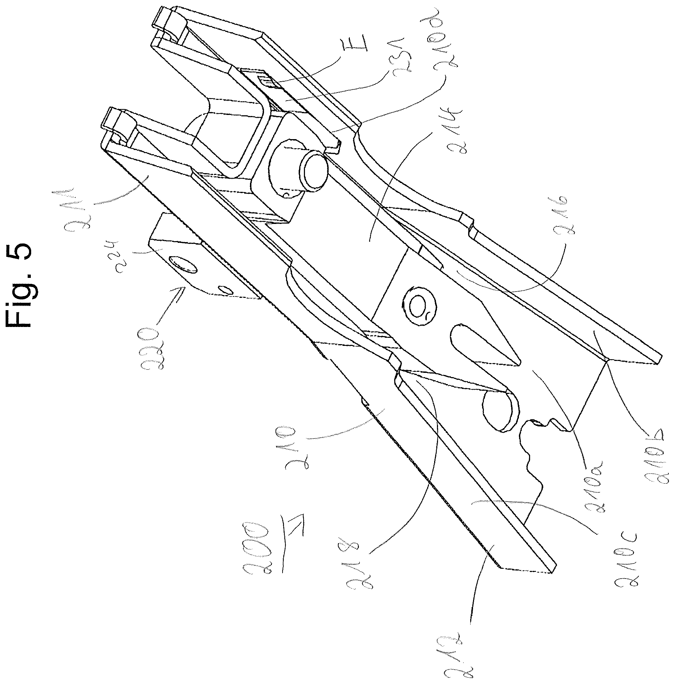

Fig. 5 is a perspective view to guide device 200 according to the present invention, seen from below. Guide device 200 includes an approximately U-shaped coverage 210 having a first end 211 and a second end 212, a top plate 210a formed by the bottom of the "U" and side plates 210b, 210c formed by the legs of the "U". The open side of the "U" faces downwards and the channel or track formed by coverage 210 extends in feeding direction FE. Inside coverage 210, a separating block 214 is arranged, which forms a first guide channel or first guide track 216 and a second guide channel or second guide track 218 between its side surfaces and the respective side plates 210b, 210c of coverage 210. Biasing prongs 219 extend out of first and second guide channels 216, 218 at the first end 211 of coverage 210.

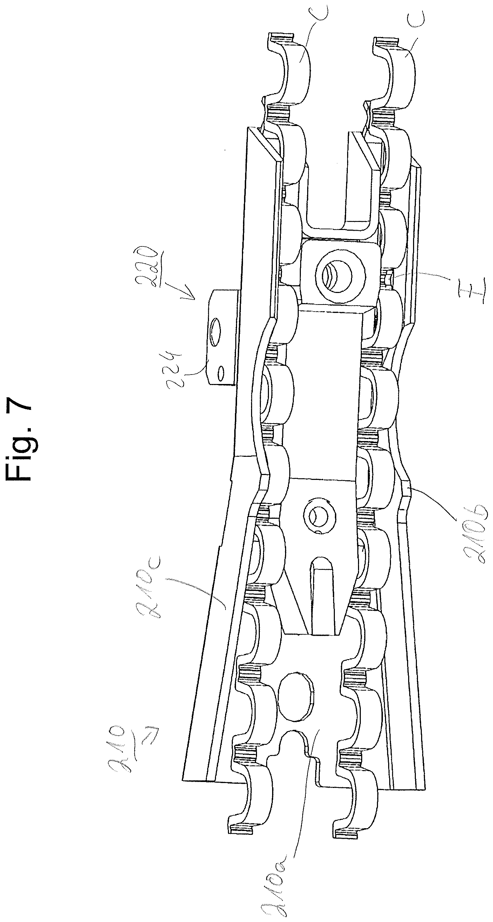

As it can be seen in Figs. 6 and 7, which are further perspective views to guide device 200, one strand of closure clips C is arranged in each of first and second guide channels 216, 218, such that the ends of biasing prongs 219 rest on the connection portions or connecting web between foremost closure clip C and following closure clip C in the strand of closure clips C.

As it particularly can be seen in Fig. 6, at top plate 210a of coverage 210, a holding unit 220 is arranged. Holding unit 220 includes two brackets 222, 224 that extend vertically and in feeding direction FE. Brackets 222, 224 are arranged along the longitudinal edges of top plate 210a of coverage 210. Between brackets 222, 224, a first guide bolt 226 and a second guide bolt 228 extend in a horizontal plane and vertically to feeding direction FE.

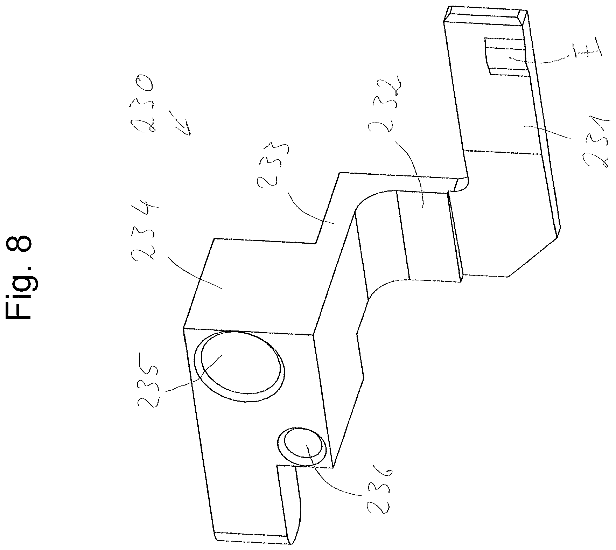

Holding unit 220 further includes a retaining element 230 which is separately shown in Fig. 8. As it can be seen in Fig. 8, retaining element 230 has an L-shaped portion with a horizontal arm 231 and a vertical arm 232, and which are arranged in an approximately vertical plan. At the side surface of horizontal arm 231, which faces towards the strands of closure clips C, an engagement element E in the form of a protrusion is arranged. A horizontal plate 233 extends from the upper end of vertical arm 232 to the left and terminates in an approximately cuboid guide block 234. As further can be seen in Fig. 8, a first guide hole 235 and a second guide hole 236 are arranged in guide block 234, such that guide block 234 is guided along first and second guide bolts 226, 228 between brackets 222, 224.

In the right side plate 210b of coverage 210, an L-shaped cut-out 210d is provided, the shape of which coincides with the shape of the L-shaped portion of retaining element 230. Moreover, in the outer surface of bracket 222, a rectangular recess 222a is arranged for receiving the upper end of vertical arm 232 of L-shaped portion of retaining element 230 and a portion of horizontal plate 233 that extends through recess 222a in bracket 222.

As it can be seen in Fig. 5, cut-out 210d in side plate 210b of coverage 210 extends completely through side plate 210b such that the L-shaped portion, and particular, horizontal arm 231 of retaining element 230 is visible at the inner side of side plate 210b. The L-shaped portion of retaining element 230 has a thickness that at least approximately corresponds to the thickness of side plate 210b. Accordingly, the L-shaped portion approximately flushes with the outer and inner surface of side plate 210b, whereas engagement element E exceeds the inner surface of side plate 210b of coverage 210. Thus, as it can be seen in Fig. 7, engagement element E engages in a gap between two subsequent closure clips C of the strand of clips C.

Holding unit 200 further includes an actuation element AE in the form of a compression spring. Actuation element or compression spring AE is arranged at guide bolt 226 between bracket 222 and guide block 234, such that guide block 234 is pushed to the left, whereby the L-shaped portion with horizontal arm 231 and vertical arm 232 is forged into recess 210d and 222a.

For producing sausage-shaped products S on system 1, tubular packaging casing M stored on filling tube 10 of clipping machine CM and closed at its front end by a closure clip C, is filled with filling material that is fed through filling tube 10 into tubular packaging casing M in filling direction F. After a predetermined portion of filling material is fed into tubular packaging casing M, upper and lower displacer elements of first and second displacer units 32, 34 are moved from their open position to their closed position to form a gathered portion or section to filled tubular packaging casing M. Thereafter, first displacer unit 32 carries out a linear movement in a horizontal direction and coaxially to filling direction F. As a result, a plait-like portion P is formed on the gathered or shirred portion of tubular packaging casing M and two closure clips C are applied to plait-like portion P and closed by clipping device 20, a first closure clip C for closing the just filled tubular packaging casing M for forming a complete sausage-shaped product S, and a second closure clip C for closing the front end of sausage-shaped product S subsequently to be produced. A suspension element L is provided by a respective feeding device and attached to one end of sausage-shaped product S by means of one of closure clips C. For severing just produced sausage-shaped product S from the remaining supply of tubular packaging casing M, cutting device 40 is activated so that plait-like portion P is cut between two closure clips C just set and the sausage-shaped product S just produced can be discharged from clipping machine CM by discharge device 50. Suspension element L of sausage-shaped product S just produced is captured by a catching unit and guided towards a rod-like element, e.g. provided in a hanging line, to be suspended therefrom by suspension element L.

During the production process, the strands of closure clips C are fed stepwise towards clipping device 20 by feeding device 300, such that, after the closing process is finished and the sausage-shaped product S just produced has been removed from clipping machine CM, the next closure clips C are placed in die 24.

After the closure clips C presently positioned in die 24 have been cut off from the strands of closure clips C, feeding elements 320, 330 of feeding lever 310 are out of engagement with the strand of closure clips C. In this situation, holding unit 220 holds the strands of closure clips C in this position, engagement element E engages the gap between two subsequent closure clips C in the strand of closure clips C, and prevents the strands of closure clips C from slipping forwards out of guide device 200 or being pulled back by tension.

Additionally or alternatively, it is possible to adapt cut-out 210d in side plate 210b of coverage 210 and/or L-shaped portion of retaining element 230 such that horizontal arm 231 of retaining element 230 laterally abuts the strand of closure clips C and exerts a clamping force thereto.

As explained above, usually, two closure clips C are applied to plait-like Portion P, for producing sausage-shaped products S. However, if it is intended to produce chains of sausage-shaped products S, it may be desirable to place only one closure clip C at plait-like Portion P between two subsequent sausage-shaped products S.

For placing only one closure clip C on plait-like portion P, before feeding the strands of closure clips C towards clipping device 20 by feeding device 300, pivot drive 350 is activated, and first feeding element 320, via pivot lever 356 and pivot pin P, is moved from the transport position as shown in Fig. 2, into the retracted position according to Fig. 3. Thereafter feeding device 300 is activated.

Since first feeding element 320 is in the retracted position, whereas second feeding element 330 remains in the transport position, only the second strand of clips is fed towards clipping device 20,and only one closure clip C, namely the front most closure clip C of the second strand of closure clips C, is placed in die 24 to be applied to the plait-like portion P of the filled and gathered tubular packaging casing M.

Dependent on the length of the chain of sausage-shaped products S, first feeding element 320 remains in the retracted position. While producing the final sausage-shaped product S of the chain of sausage-shaped products S, and particularly, while filling the final portion of tubular packaging casing M, first feeding element 320 is moved back into the transport position. Accordingly, when feeding the closure clips C for closing the rear end of the final sausage-shaped product S, two closure clips are placed in die 24, such that one closure clips C closes the rear end of the final sausage-shaped product S in the chain, and one closure clip C closes the front end of the sausage-shaped product S in the chain of sausage-shaped products S to be produced next.

The activation and deactivation of pivot drive 350 for interrupting or for continuing the feeding of closure clips C towards clipping device 20, may be controlled by control unit CU. In control unit CU, programs for producing chains of sausage-shaped products S may be stored and may be called up by an operator. However, it is also possible that the operator at first selects the kind of sausage-shaped products S to be produced, and then adjusts the number of sausage-shaped products S for the chains of sausage-shaped products S to be produced. It is further possible that the operator adapts or modifies the number of sausage-shaped products S in the chain during the production process, or that the operator permanently activates pivot drive 350 for producing an "endless" chain of sausage-shaped products S.

In the embodiment of clipping lever 100 according to Figs. 2 to 4, only one holding unit is provided for holding one of the strands of closure clips C in their position. However, it is also possible to provide a second holding unit for holding the second strand of closure clips C in their position, or to provide the holding unit with a second retaining element acting on the second strand of closure clips C.

Furthermore, a clipping machine CM may be equipped to apply more than two closure clips C on a plait-like portion P, like three or four closure clips C. Accordingly, said clipping machine may be provided with a guide device which includes more than one holding unit, or with a holding unit that may hold more than one strand of closure clips C in their position. Moreover, such a holding unit may be adapted to hold one or more selected strands of closure clips C in their position.

It is further possible that not only the first feeding element but also the second feeding element may reversibly be moved between a transport position and a retracted position. In this case, it is further possible to move the first and the second feeding elements together or independently from each other.

The feeding device may also be provided with more than two feeding elements, like three or four. Also in this case, it is possible to move one or more of the feeding elements between the transport position and the retracted position.

Feeding element 320 of feeding device 300 has been described as being pivoted between the transport position and the retracted position by pivot drive 350. However, it is also possible that feeding element 320 is linearly movable between the transport position and the retracted position. In this configuration, a linear drive may be provided which e.g. may include a piston/cylinder drive for linearly moving feeding element 320 along feeding lever 310.

Even though the present description discloses closure clips as closure means, the present invention can also be implemented in connection with other closure means.

## Claims

1. A system (1) for feeding closure clips (C) to a clipping device (20) of a clipping machine (CM) for producing sausage-shaped products (S), like sausages, the system (1) comprising:
- a feeding device (300) for at least selectively feeding at least a first or a second strand of closure clips (C) towards a closing position of the clipping device (20), in which the foremost clip (C) of one or both strands of closure clips (C) can be attached to the sausage-shaped product (S), and
- a guide device (200) having at least a first and a second guide track (216, 218) for guiding the at least first and second strand of closure clips (C) towards the closing position of the clipping device (20),
wherein the guide device (200) comprises at least one holding unit (220) for holding one of the strands of closure clips (C), the first or the second strand of closure clips (C), in a position outside the closing position of the clipping device (20) when the feeding device (300) feeds the other strand of closure clips (C) into the closing position.

2. The system (1) according to claim 1,
wherein the feeding device (300) is configured to feed at least the first and/or the second strand of closure clips (C) stepwise towards the closing position of the clipping device (20), and
wherein the holding unit (220) is configured to hold one of the strands of closure clips (C), the first or the second strand of clips (C), in a position outside of the closing position of the clipping device (20), at least between two suces-sive feeding steps.

3. The system (1) according to claim 1 or 2,
wherein the holding unit (220) includes at least one retaining element (230) which is movable between a holding position for holding one of the strands of closure clips (C), the first or the second strand of closure clips (C), in the position outside the closing position of the clipping device (20) by a reversible engagement with the strand of closure clips (C) to be held, and a release position in which the retaining element (230) is out of engagement with the strand of closure clips (C).

4. The system (1) according to claim 3,
wherein the at least one retaining element (230) has an engaging portion (E) for engaging with a recess formed in the strand of closure clips (C) of said at least one of the first and second strand of closure clips (C) when said retaining element (230) is in the holding position.

5. The system (1) according to any one of claims 1 to 4,
wherein the holding unit (220) has an actuation element (AE) for reversibly keeping the at least one retaining element (230) in the holding position.

6. The system (1) according to claim 5,
wherein the actuation element (AE) is moved passively or actively into the holding position.

7. The system (1) according to any of claims 1 to 6,
wherein said guide device (200) includes a coverage (210), preferably forming a portion of the first and second guide tracks (216, 218), and
wherein the at least one retaining element (230) is provided in a recess (210d) arranged in said coverage (210).

8. The system (1) according to any of claims 1 to 7,
wherein the feeding device (300) comprises a feeding unit (310, 340) for feeding the first and the second strand of closure clips (C) towards the closing position of the clipping device (20), which has a feeding lever (310) with a first and a second feeding element (320, 330), wherein the first feeding element (320) engages the first strand of closure clips (C) during feeding of the first strand of closure clips (C), and the second feeding element (330) engages the second strand of closure clips (C) during feeding of the second strand of closure clips (C), and
wherein at least one of the feeding elements (320, 330), the first or the second feeding element (320, 330), is reversibly movable between a feeding position in which said at least one feeding element (320, 330) is in engagement with one of the strands of closure clips (C), the first or the second strand of closure clips (C), during feeding of the strands of closure clips, and a retracted position in which said at least one feeding element (320; 330) is out of engagement with one of the strands of closure clips (C), the first or the second strand of closure clips (C), during feeding of the other strand of closure clips for interrupting the feeding of said strand of closure clips (C).

9. The system (1) according to claim 8,
wherein the at least one of the first and second feeding elements (320; 330) is pivotally coupled to said feeding lever (310).

10. The system (1) according to claim 8,
wherein the at least one of the first and second feeding elements (320; 330) is linearly movable along said feeding lever (310).

11. A clipping machine (CM) for producing sausage-shaped products (S), like sausages, by filling a filling material into a tubular packaging casing (M), the clipping machine (CM) comprising:
- a clipping device (20) having first and second closing tools (22, 24) reversibly movable between an open position and a closed position for applying two closure clips (C) to a plait-like portion (P) formed to a filled and gathered tubular packaging casing (M), and closing said closure clips (C) by moving the closing tools (22, 24) to their closed position, wherein a first closure clip (C) for closing the just filled portion of the tubular packaging casing (M) and a second closure clip (C) for closing the portion of the tubular packaging casing (M) to be filled next,
- a control unit (CU) for controlling the clipping machine (CM), and
- a system (1) according to any of claims 1 to 10 for feeding closure clips (C) to a closing position of the clipping device (20), in which the foremost clip (C) of one or both strands of closure clips (C) is configured to be attached to the sausage-shaped product (S).

12. The clipping machine (CM) according to claim 11,
wherein the control unit (CU) further controls the feeding device (300) for selectively feeding a first or a second strand of closure clips (C) towards the closing position of the clipping device (20).

13. A guide device (200) for use in a clipping machine (CM) for producing sausage-shaped products (S), like sausages, the guide device (200) comprising at least a first and a second guide track (216, 218) for guiding at least a first and a second strand of closure clips (C) towards a closing position of a clipping device (20) of the clipping machine (CM), in which the foremost clip (C) of one or both strands of closure clips (C) is configured to be attached to the sausage-shaped product (S),
wherein the guide device (200) comprises a holding unit (220) for holding one of the strands of closure clips (C), the first or the second strand of closure clips (C), in a position outside the closing position of the clipping device (20) when the feeding device (300) feeds the other strand of closure clips (C) to the closing position.

14. A method for producing sausage-shaped products (S), like sausages, the method comprises the steps of:
- filling a filling material into a tubular packaging casing (M) and forming a plait-like portion (P) to said filled tubular packaging casing (M),
- applying two closure clips (C) to said plait-like portion (P) and closing said closure clips (C) by a clipping device (20) of a clipping machine (CM) having first and second closing tools (22, 24) which are reversibly movable between an open position and a closed position, a first closure clip (C) for closing the just filled portion of the tubular packaging casing (M) and a second closure clip (C) for closing the portion of the tubular packaging casing (M) to be filled next,
- at least selectively feeding by a feeding device (300) a first or a second strand of closure clips (C) towards a closing position of the clipping device (20), in which the foremost clip (C) of one or both strands of closure clips (C) is configured to be attached to the sausage-shaped product (S),
- guiding by a guide device (200) the first and the second strand of closure clips (C) towards the clipping device (20), such that the foremost closure clip (C) of the first or the second strand of closure clips (C) is arranged in the closing position of the clipping device (20), and
- holding one of the strands of closure clips (C), the first or the second strand of closure clips (C), in a position outside the closing position of the clipping device (20), when the feeding device (300) feeds the other strand of closure clips (C) to the closing position.

15. The method according to claim 14, further comprising the step of interrupting the feeding of one of the strands of closure clips (C) towards the closing position of the clipping device (20), at least for one feed step.
